# FASCICULE DE BREVET EUROPEEN

(11) **EP 4 205 994 B1**
(45) Date de publication et mention de la délivrance du brevet: **19.06.2024**
(21) Numéro de dépôt: 22210341.8
(22) Date de dépôt: 29.11.2022
(51) Int. Cl.: B44C 3/00, B44C 1/22, F21S 41/20, F21S 41/37, B23K 26/362, F21S 43/20

(54) **PROCÉDÉ DE FABRICATION D'UNE PIÈCE DE VÉHICULE TRANSLUCIDE OU TRANSPARENTE**
VERFAHREN ZUR HERSTELLUNG EINES LICHTDURCHLÄSSIGEN ODER TRANSPARENTEN FAHRZEUGTEILS
METHOD FOR PRODUCING A TRANSLUCENT OR TRANSPARENT VEHICLE PART

(30) Priorité: 01.12.2021 FR 2112817
(43) Date de publication de la demande: 05.07.2023
(73) Titulaire: Compagnie Plastic Omnium SE, 69007 Lyon (FR)
(72) Inventeur: CORNET, Olivier, 01150 Sainte-Julie (FR); GUILLIER, Stéphane, 01150 Sainte-Julie (FR); HUSAK, Xavier, décédé(e) (FR)
(74) Mandataire: LLR

(56) Documents cités:
- EP-A1- 3 772 380
- EP-A1- 3 815 838
- EP-A1- 3 838 612
- EP-A2- 2 006 119
- EP-B1- 2 628 638
- EP-B1- 3 647 054
- WO-A1-2021/043397
- US-A1- 2019 029 116

## Description

L'invention concerne une pièce de véhicule automobile. Plus particulièrement, l'invention concerne un procédé de fabrication d'une pièce de véhicule transparente ou translucide et contribuant à l'aspect extérieur du véhicule et une pièce de véhicule obtenue par un tel procédé.

Un véhicule comprend plusieurs pièces transparentes ou translucides destinées à transmettre de la lumière. Il s'agit notamment des pièces utilisées à des fins d'éclairage réglementaire, par exemple celles protégeant les blocs optiques des feux de route et de croisement ou bien des feux clignotants. Par ailleurs, le véhicule peut également présenter des sources de lumière prévues à des fins décoratives qui améliorent l'esthétique du véhicule.

A ces fins, il est possible de traiter une surface externe des pièces transparentes ou translucides afin d'améliorer leur aspect. Une possibilité pour ce faire consiste à surmouler un film, ou masque, opaque sur la surface externe de la pièce, le film opaque présentant un motif prédéfini permettant le passage de la lumière. De la sorte, lorsque la source de lumière associée à la pièce émet de la lumière, cette dernière est partiellement bloquée par l'opacité du film opaque et partiellement transmise par les parties de la pièce qui sont en regard du motif. Cela permet d'améliorer l'esthétique du faisceau lumineux transmis, par la pièce transparente ou translucide, de la source de lumière vers l'environnement extérieur. Une autre possibilité consiste à décorer la pièce par peinture et marouflage ou par peinture et gravure laser, ce qui permet d'obtenir un résultat similaire. La demande de brevet EP3838612.A1, déposée au nom de la demanderesse, divulgue un procédé de fabrication d'une pièce de véhicule selon le préambule de la revendication 1.

Ces options sont intéressantes mais présentent certains inconvénients. En effet, un film opaque tel que décrit ci-dessus peut poser des problèmes de correspondance de couleur avec la peinture du véhicule, ce qui a un impact négatif sur l'esthétique du véhicule. De plus, l'application du film opaque selon l'une des manières présentées ci-dessus peut ne pas permettre d'obtenir un motif d'une précision aussi élevée que souhaitée.

Un autre problème se manifestant avec le film opaque de l'art antérieur réside dans le passage de lumière à travers les parties de la pièce transparente ou translucide qui ne sont pas recouvertes par le motif. En effet, la lumière est transmise librement à travers ces parties, si bien que les éléments se trouvant derrière la pièce sont visibles de l'extérieur si la source de lumière associée à la pièce est éteinte. Il s'agit principalement de la source de lumière et possiblement d'éléments de câblage. La mise à vue de ces éléments n'est pas souhaitée dans la mesure où elle nuit à l'esthétique générale du véhicule, si bien qu'il est préférable de l'éviter. Et dans certains cas en fonction du cahier des charges en matière d'esthétique, il peut aussi être préférable d'éviter la mise à vue de la pièce transparente ou translucide elle-même.

L'invention a notamment pour but de remédier à ces problèmes en proposant un procédé ne posant pas de problème de correspondance de couleur avec la peinture du véhicule, qui soit plus précis que celui de l'art antérieur et qui permette de dissimuler les éléments se trouvant derrière la pièce transparente ou translucide.

A cet effet, on prévoit selon l'invention un procédé de fabrication d'une pièce de véhicule qui comprend les étapes suivantes :
a1) application d'une couche de peinture sur une première face d'une pièce transparente ou translucide,
a2) application d'une couche de vernis sur la couche de peinture,
a3) irradiation partielle de la couche de peinture et de la couche de vernis avec un rayonnement laser de manière à graver la couche de peinture et la couche de vernis, et
b) surmoulage d'un film semi-transparent sur une seconde face de la pièce transparente ou translucide opposée à la première face, selon la revendication 1.

On peut ainsi appliquer la peinture sur toute la surface de la pièce transparente ou translucide puis la retirer par gravure à l'aide du rayonnement laser selon un motif prédéfini choisi. On comprend que le laser permet de retirer la peinture afin d'obtenir un rendu plus précis qu'en mettant en oeuvre l'un des procédés de l'art antérieur. De plus, le fait que la couleur du revêtement soit donnée par de la peinture et non par un film comme dans l'art antérieur rend possible de choisir une peinture qui corresponde à celle utilisée pour la carrosserie du véhicule. Il s'ensuit qu'aucun problème de correspondance de couleur, ou d'harmonie de teinte, ne se pose.

Le film semi-transparent permet d'empêcher de voir à travers la pièce transparente ou translucide lorsque la source de lumière est éteinte, sans pour autant empêcher la transmission de la lumière émise par la source de lumière lorsqu'elle est allumée. On comprend ainsi qu'on évite que les éléments se trouvant derrière la pièce transparente ou translucide aient un impact sur l'esthétique du véhicule puisqu'ils sont occultés par le film semi-transparent.

Le surmoulage du film semi-transparent renforce également la résistance au choc de la pièce de véhicule en agissant comme un vitrage feuilleté de sécurité. Cela est particulièrement avantageux dans le cas où la pièce de véhicule forme des panneaux de carrosserie, tels que des pare-chocs.

Etant donné que le film semi-transparent n'est pas déposé sur la même face de la pièce transparente ou translucide que les couches de vernis et de peinture, les opérations de dépôt sur les première et seconde faces de la pièce peuvent se faire indépendamment les unes des autres, de sorte que le procédé est simple à mettre en oeuvre.

En outre, le film semi-transparent est déposé sur la seconde face de la pièce transparente ou semi-transparente qui est destinée à être orientée du côté intérieur du véhicule, c'est-à-dire vers la source de lumière. En d'autres termes, le film semi-transparent est abrité de l'environnement extérieur par la pièce transparente ou translucide. Dès lors, les contraintes s'imposant au film semi-transparent en termes de tenue mécanique, par exemple de résistance à des jets d'eau sous pression, à la rayure ou au gravillonnage, sont moins critiques que si le film était déposé sur la première face de la pièce transparente ou translucide.

Par « couche de peinture », on entend que ladite couche peut notamment comporter un primaire et une base colorée, un primaire et une laque colorée ou encore une laque colorée seule.

Avantageusement, on met en oeuvre l'étape suivante avant l'étape a1) :
a0) application d'une couche de protection, comprenant par exemple un vernis, sur la première face de la pièce transparente ou translucide, sous la couche de peinture.

L'agencement des différentes couches et l'ordre dans lequel on les applique permet de s'affranchir des difficultés techniques suivantes :
- dans le cas où elle est réalisée en polycarbonate, la pièce transparente est impossible à traiter pour la protéger des rayonnements ultraviolets, ce qui rend la présence d'au moins une couche de vernis nécessaire.
- il est très difficile de faire adhérer une couche de vernis directement sur une autre couche de vernis.

Avantageusement, on fabrique la pièce transparente ou translucide par moulage d'un plastique, par exemple du polycarbonate, du polypropylène, du polytéréphtalate d'éthylène ou du poly(méthacrylate de méthyle).

La pièce transparente ou translucide est ainsi simple à réaliser et peu onéreuse.

Avantageusement, le rayonnement laser présente une longueur d'onde comprise dans l'infrarouge, de préférence dans l'infrarouge proche, ou dans l'ultraviolet.

Un tel rayonnement laser permet d'efficacement éliminer la couche de peinture et la couche de vernis.

Avantageusement, la couche de vernis et la couche de protection sont réalisées dans un matériau absorbant ou réfléchissant des rayonnements ultraviolets.

En d'autres termes, la couche de vernis et la couche de protection ne permettent pas la transmission des rayonnements ultraviolets. On protège ainsi la pièce transparente ou translucide des rayonnements ultraviolets qui pourraient la détériorer par photodégradation car toute sa surface extérieure est revêtue de la couche de protection et, dans une partie, de la couche de vernis.

Avantageusement, la couche de peinture comporte une sous-couche de primaire.

La sous-couche de primaire permet d'opacifier la couche de peinture et ainsi d'améliorer son aspect. Sans sous-couche de primaire, il serait nécessaire d'augmenter l'épaisseur de la couche de peinture pour obtenir un rendu similaire, ce qu'il est préférable d'éviter pour des raisons d'aspect (coulure, teinte), de coûts et d'adhérence de la couche de peinture à la pièce transparente ou translucide. De plus, cela permet d'améliorer l'accroche de la peinture à la pièce transparente ou translucide tout en permettant d'avoir une couche de vernis dans les zones sans peinture.

Avantageusement, après l'étape d'irradiation, on lustre la pièce de véhicule.

On améliore ainsi la transparence de la pièce de véhicule en limitant les effets de bord des zones irradiées. Spécifiquement, on atténue la forme en escalier des couches qui revêtent la pièce transparente ou translucide, ce qui contribue à rendre plus homogène son aspect de surface.

Avantageusement, le film semi-transparent présente un effet visuel choisi parmi la liste suivante : aspect chromé, métallisé, brillant, mat, satiné, brossé ou cuivré, effet miroir.

On donne ainsi au film semi-transparent un effet lumineux esthétique lorsqu'il est éclairé par la source de lumière, et permet d'efficacement dissimuler les éléments derrière la pièce transparente ou translucide lorsque la source de lumière est éteinte.

Avantageusement, le film semi-transparent comprend un empilement de couches réalisées en polytéréphtalate d'éthylène.

Ce type de structure permet au film semi-transparent de présenter un aspect chromé avec des moyens simples et peu onéreux.

Avantageusement, le film semi-transparent présente une épaisseur comprise entre 100µm et 1 mm.

Cette gamme d'épaisseur fournit un bon compromis entre la transmission de la lumière émise par la source de lumière, la dissimulation des éléments derrière la pièce transparente ou translucide lorsque la source de lumière est éteinte, la tenue mécanique du film et son coût de fabrication.

Avantageusement, la pièce transparente ou translucide présente, sur sa première face, au moins une forme en relief principale.

On permet ainsi de créer un effet lumineux particulier grâce à la diffusion de la lumière dans la forme en relief principale. Cet effet lumineux est en outre amplifié par la présence du film semi-transparent. Au surplus, par rapport à une configuration dans laquelle le film semi-transparent serait déposé sur la première face de la pièce transparente ou translucide, l'effet lumineux obtenu est davantage amplifié et permet de procurer un effet de profondeur en trois dimensions particulièrement esthétique, notamment si la pièce transparente ou translucide est colorée.

De préférence, on effectue l'irradiation laser de l'étape a3) au moins en regard de l'au moins une forme en relief principale.

De la sorte, le motif créé dans la couche de peinture par irradiation laser coïncide avec la zone de la pièce transparente ou translucide comprenant l'au moins une forme en relief principale. Cela permet par ailleurs d'éviter d'obtenir un effet dit « autocollant » ou « sticker » selon lequel la différence de niveau entre les zones du motif et les zones en dehors du motif peut être sentie en faisant glisser un doigt ou un ongle, ce qui procure un certain effet plutôt désagréable et connote une moindre qualité de la pièce de véhicule.

De préférence, la deuxième face présente au moins une forme en relief secondaire opposée à la forme en relief principale et de convexité opposée.

On augmente ainsi le champ d'application des effets lumineux qui peuvent être générés par les formes en relief en combinaison avec le film semi-transparent, ce qui permet d'améliorer grandement l'esthétique de la pièce de véhicule. En outre, la pièce transparente ou translucide présente ainsi une épaisseur uniforme, ce qui permet d'améliorer la qualité de l'étape de moulage de la pièce en évitant la formation de défauts d'aspect.

On prévoit également selon l'invention une pièce de véhicule obtenue par la mise en oeuvre d'un procédé de fabrication tel que défini dans ce qui précède. En d'autres termes, on prévoit également selon l'invention une pièce de véhicule comprenant :
- une pièce transparente ou translucide présentant une première face et une seconde face opposée à la première face,
- une couche de peinture appliquée sur la première face,
- une couche de vernis appliquée sur la couche de peinture, la couche de peinture et la couche de vernis étant gravée selon un même motif prédéterminé, et
- un film semi-transparent surmoulé sur la seconde face de la pièce transparente ou translucide, selon la revendication 11.

Avantageusement, le film semi-transparent présente un effet visuel choisi parmi la liste suivante : aspect chromé, métallisé, brillant, mat, satiné, brossé ou cuivré, effet miroir.

Avantageusement, le film semi-transparent comprend un empilement de couches réalisées en polytéréphtalate d'éthylène.

Avantageusement, le film semi-transparent présente une épaisseur comprise entre 100µm et 1 mm.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en section d'une première étape de la mise en oeuvre d'un procédé de fabrication d'une pièce de véhicule selon un premier mode de réalisation de l'invention,
[Fig. 2] la figure 2 est une vue en section d'une deuxième étape de la mise en oeuvre d'un procédé de fabrication de la pièce de véhicule selon le premier mode de réalisation de l'invention,
[Fig. 3] la figure 3 est une vue en section d'une pièce de véhicule issue de la mise en oeuvre d'un procédé de fabrication selon un deuxième mode de réalisation de l'invention,
[Fig. 4] la figure 4 est une vue en section d'une pièce de véhicule issue de la mise en oeuvre d'un procédé de fabrication selon une variante du deuxième mode de réalisation de l'invention,
[Fig. 5] la figure 5 est une vue en section d'une pièce de véhicule issue de la mise en oeuvre d'un procédé de fabrication selon un troisième mode de réalisation de l'invention, et
[Fig. 6] la figure 6 est une vue en section d'une pièce de véhicule issue de la mise en oeuvre d'un procédé de fabrication selon une variante du troisième mode de réalisation de l'invention.

### Description détaillée

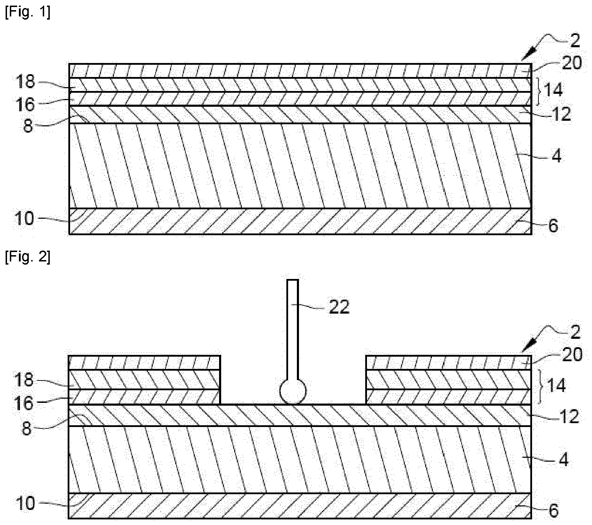

On a représenté sur la figure 1 une première étape d'un procédé de fabrication d'une pièce de véhicule 2 selon un premier mode de réalisation de l'invention.

La pièce de véhicule 2 comprend une pièce transparente ou translucide 4 destinée à protéger une source de lumière (non représentée). On entend par « transparente », respectivement « translucide », qu'elle est au moins transparente, respectivement translucide, à tout rayonnement lumineux présentant une longueur d'onde comprise dans le spectre visible, c'est-à-dire comprise entre environ 380 et 780 nm. La pièce 4 est ici transparente et réalisée dans un plastique présentant cette caractéristique, en l'occurrence du polycarbonate communément désigné « PC ». On peut toutefois prévoir de réaliser la pièce dans un tout autre plastique, par exemple le polypropylène (PP) (translucide), du polytéréphtalate d'éthylène (PET) (translucide) ou le poly(méthacrylate de méthyle) (PMMA) (transparent). La pièce transparente ou translucide 4 est réalisée par moulage. Un tel procédé étant connu, on ne le détaillera pas davantage dans ce qui suit.

La pièce de véhicule 2 comprend un film semi-transparent 6 qui est surmoulé sur la pièce transparente 4. La pièce transparente 4 présente une première face 8 qui forme la surface externe de la pièce transparente 4. Par « surface externe », on entend une surface de la pièce transparente 4 qui n'est pas située en regard de la source de lumière et qui est destinée à être exposée à l'environnement extérieur une fois le véhicule fabriqué. La pièce transparente 4 présente en outre une seconde face 10, formant la surface interne de la pièce transparente 4, opposée à la première face 8. En d'autres termes, la lumière émise par la source de lumière rencontre d'abord la seconde face 10 puis la première face 8 avant d'entrer dans l'environnement extérieur. Le film-semi-transparent 6 est ici surmoulé sur la seconde face 10 de la pièce transparente 4.

Le film semi-transparent 6 est défini en tant que tel en ce qu'il permet la transmission de la lumière émise par la source de lumière, avec une éventuelle absorption partielle de cette lumière, mais empêche la transmission de la lumière naturelle. Ici, le film semi-transparent 6 comprend un empilement de couches réalisées en polytéréphtalate d'éthylène (PET) de sorte que le film semi-transparent 6 présente une épaisseur comprise entre 100 µm et 1 mm. Cet empilement de couches permet de conférer au film semi-transparent 6 un aspect chromé, mais on peut prévoir de remplacer l'empilement de couches réalisées en polytéréphtalate d'éthylène par un tout autre empilement pour conférer un autre aspect au film semi-transparent. Par exemple, on peut choisir la constitution du film semi-transparent de sorte qu'il présente un effet visuel choisi parmi la liste suivante : aspect chromé, métallisé, brillant, mat, satiné, brossé ou cuivré, effet miroir. Le film semi-transparent 6 présente une forme simple, exempte d'ouvertures, recouvrant l'intégralité de la seconde face 10 ou à tout le moins une partie de celle-ci. On verra dans la suite en quoi ces propriétés du film semi-transparent 6 sont intéressantes dans le cadre de l'invention.

La pièce de véhicule 2 comprend ici une couche de protection 12 qui est déposée sur la première face 8 de la pièce transparente 4. La couche de protection 12 comprend ici un vernis et permet de protéger la pièce transparente 4 de tout rayonnement ultraviolet auquel elle peut être exposée, notamment du soleil. En outre, la couche de protection 12 permet de protéger mécaniquement la pièce transparente 4, notamment pour éviter qu'elle soit rayée ou déformée par des sollicitations extérieures. Dans l'absolu, la présence de la couche de protection 12 est optionnelle. La couche de protection 12 est transparente à tout rayonnement lumineux présentant une longueur d'onde comprise dans le spectre visible, de manière à ne pas empêcher la transmission de la lumière émise par la source de lumière à travers la pièce de véhicule 2.

La pièce de véhicule 2 comprend une couche de peinture 14 qui est déposée au-dessus de la couche de protection 12. Ici, la couche de peinture 14 comporte une sous-couche de primaire 16 sur laquelle est déposée une couche de base 18. La couche de base 18 permet de colorer l'aspect extérieur de la pièce de véhicule 2. La sous-couche de primaire 16 permet d'améliorer l'opacité de la couche de peinture 14 et d'améliorer l'adhérence de la couche de base 18 à la pièce transparente 4.

La pièce de véhicule 2 comprend une couche de vernis 20 qui est déposée au-dessus de la couche de peinture 14. La couche de vernis 20 permet de protéger la pièce transparente 4 et la couche de peinture 14 de tout rayonnement ultraviolet auquel elles peuvent être exposées. Ici, la couche de protection 12 et la couche de vernis 20 sont réalisées dans le même matériau, mais on peut prévoir d'utiliser deux vernis différents pour réaliser les deux couches 12, 20.

Pour déposer le film semi-transparent 6 et les différentes couches sur la pièce transparente 4, on met en oeuvre les étapes suivantes représentées sur la figure 1 :
a0) application de la couche de protection 12 sur la première face 8 de la pièce transparente 4,
a1) application de la couche de peinture 14 sur la couche de protection 12,
a2) application de la couche de vernis 20 sur la couche de peinture 14, et
b) surmoulage du film semi-transparent 6 sur la seconde face 10 de la pièce transparente 4.

Parmi les étapes listées ci-dessus, les étapes a0), a1) et a2) sont réalisées successivement. L'étape b) est quant à elle réalisée indépendamment de la mise en oeuvre préalable des étapes a0), a1) et a2), bien qu'elle soit généralement réalisée avant la mise en oeuvre des étapes a0), a1) et a2).

On a représenté en figure 2 une étape suivante du procédé de fabrication de la pièce de véhicule 2. Dans cette étape a3), on irradie une partie de la pièce de véhicule 2 à l'aide d'un rayonnement laser 22 de manière à graver la couche de peinture 14 et la couche de vernis 20. Cette gravure est effectuée dans toute l'épaisseur de la couche de peinture 14 et de la couche de vernis 20. Cette opération est communément désignée par les termes anglo-saxons « laser-etching » pouvant être traduits par « gravure au laser ». Le rayonnement laser 22 présente une longueur d'onde comprise dans l'infrarouge, c'est-à-dire comprise entre 700 nm et 20000 nm dans le cadre de l'invention. Un exemple de tel rayonnement laser est celui communément désigné « laser CO₂ » qui présente une longueur d'onde de 10600 nm. De préférence, la longueur d'onde du rayonnement laser 22 est comprise dans l'infrarouge proche, c'est-à-dire comprise entre 700 et 2000 nm. Dans ce cas et si la couche de protection 12 et la couche de vernis 20 sont transparentes au rayonnement laser 22, ce dernier présente l'avantage de ne pas graver lesdites couches. On évite ainsi un risque d'endommagement desdites couches, notamment de la couche de protection. Alternativement, on peut prévoir que le rayonnement laser présente une longueur d'onde dans l'ultraviolet.

L'irradiation est réalisée uniquement dans une partie de la pièce de véhicule 2 dans le sens où elle est réalisée selon un motif prédéfini de la surface externe de la couche de vernis 20. Elle est commandée de sorte que la couche de vernis 20 et la couche de peinture 14 soient irradiées, donc éliminées dans le motif et dans toute leur épaisseur, mais pas la couche de protection 12 qui protège la pièce transparente 4 des rayonnements ultraviolets dans les zones du motif qui ont subi la gravure. Même si la couche de vernis 20 est réalisée dans un matériau transparent au rayonnement laser 22, l'irradiation de la couche de peinture 14 sous-jacente permet d'éliminer la couche de vernis 20 dans le motif.

Après l'irradiation, la surface de la pièce de véhicule 2 présente deux niveaux.

Dans la zone du motif prédéfini, la première face 8 de la pièce transparente 4 est revêtue uniquement de la couche de protection 12. Dans cette zone, la lumière émise par la source de lumière peut être transmise de la source de lumière vers l'environnement extérieur, mais dans l'autre sens le film semi-transparent limite la transmission de la lumière naturelle vers la source de lumière. De la sorte, la source de lumière et ses éventuels câblages ne sont pas visibles depuis l'extérieur du véhicule lorsque la source de lumière est éteinte.

En dehors de la zone du motif prédéfini, la première face 8 de la pièce transparente 4 est revêtue de la couche de protection 12, de la couche de peinture 14 et de la couche de vernis 20. Dans cette zone, la lumière visible ne peut être transmise de l'environnement extérieur vers la pièce transparente 4, et inversement, car elle est absorbée par la couche de peinture 14. En particulier, la protection de la pièce transparente 4 aux rayonnements ultraviolets auquel elle peut être exposée est assurée par la couche de vernis 20.

Après cette étape d'irradiation, on peut prévoir une étape supplémentaire de lustrage de la pièce de véhicule 2. Elle permet d'améliorer la transparence dans la zone du motif prédéfini et, de manière plus générale, l'esthétique de la pièce de véhicule 2. En outre, ce lustrage permet d'arrondir les coins formés par la gravure effectuée lors de l'étape d'irradiation, et donc d'améliorer l'esthétique de la pièce de véhicule 2 et son aspect de surface au toucher.

Il est possible de mettre en oeuvre une variante de réalisation selon laquelle on intervertit les étapes a2) et a3), de sorte que la couche de vernis n'est pas gravée par l'irradiation laser. Il est également possible de mettre en oeuvre une autre variante de réalisation du procédé selon laquelle on ajoute une étape a4) intervenant après l'étape a3) consistant à appliquer une couche de vernis supplémentaire au-dessus de la couche de peinture et la couche de vernis qui ont été gravées par l'irradiation laser.

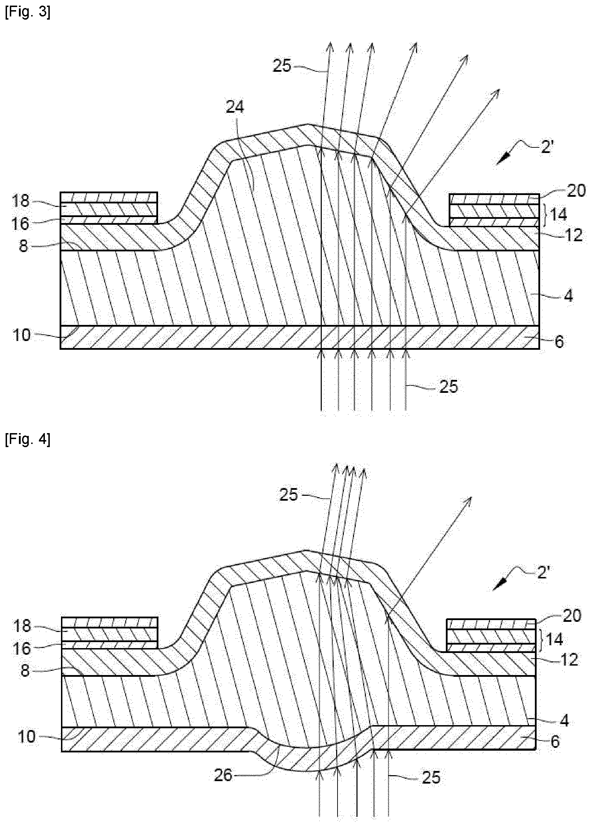

On a représenté en figure 3 une pièce de véhicule 2' obtenue par la mise en oeuvre d'un procédé de fabrication selon un deuxième mode de réalisation de l'invention. On décrira dans ce qui suit uniquement les différences que présentent la pièce de véhicule 2' par rapport à celle du premier mode de réalisation. Les éléments identiques ou similaires d'un mode de réalisation à un autre portent des références numériques identiques.

La pièce de véhicule 2' comprend une pièce transparente 4 présentant sur sa première face 8 au moins une forme en relief dite principale 24 sous la couche de protection 12. Dans l'exemple de la figure 3, elle se présente sous la forme d'une bosse convexe arrondie, mais elle peut prendre toute forme souhaitée, et en nombre souhaité. En dehors de l'au moins une forme en relief principale 24, la première face 8 présente une forme plane ou courbée. On suppose dans ce qui suit que la pièce transparente 4 comprend plusieurs formes en relief principales 24, tout en sachant qu'elle pourrait très bien comprendre une unique forme en relief principale.

Le film semi-transparent 6, la couche de protection 12, la couche de vernis 20 et la couche de peinture 14 sont déposées et gravées de la même manière que dans le précédent mode de réalisation de l'invention, en mettant en oeuvre les étapes a0) à a3) et b). De manière préférentielle, on effectue l'irradiation laser de l'étape a3) au moins en regard des formes en relief principales 24. Ainsi, le motif généré dans la couche de peinture 14 et dans la couche de vernis 20 coïncide avec les formes en relief principales 24 de la pièce transparente 4. De la sorte, la lumière émise par la source de lumière passe dans le motif à travers le film semi-transparent 6, les formes en relief principales 24 et la couche de protection 12, ce qui permet de générer une diffusion de la lumière particulièrement esthétique, notamment pour une personne ne se trouvant pas directement en face de la pièce de véhicule mais qui l'observe de côté. Cette diffusion de la lumière est illustrée sur la figure 3 par des rayons lumineux 25 émis par la source de lumière et qui sont réfractés lorsqu'ils sortent des formes en relief principales 24, créant ainsi un effet de diffusion lumineuse prismatique.

On a représenté en figure 4 une pièce de véhicule 2' selon une variante du deuxième mode réalisation illustré en figure 3. Elle en diffère en ce que la pièce transparente 4 présente sur sa deuxième face 10 au moins une forme en relief dite secondaire 26 se trouvant à l'opposé d'une forme en relief principale 24 en considérant une direction d'épaisseur de la pièce transparente 4 qui est verticale sur la figure 4. La forme en relief secondaire 26 présente une convexité similaire par rapport à la forme en relief principale 24 qui lui est opposée. Dans l'exemple de la figure 4, la pièce de véhicule 2' comprend une forme en relief principale 24 convexe et une forme en relief secondaire 26 également convexe.

L'agencement des formes en relief principale 24 et secondaire 26 permet d'obtenir une distribution lumineuse au niveau de la première face 8 de la pièce transparente 4 différente de celle obtenue avec la pièce de véhicule de la figure 3. Par la convexité des formes en relief principale 24 et secondaire 26, on obtient par la réfraction des rayons lumineux 25 au niveau de la seconde face 10 puis de la première face 8 des concentrations locales des rayons lumineux traversant la pièce 4, créant ainsi un effet esthétique certain.

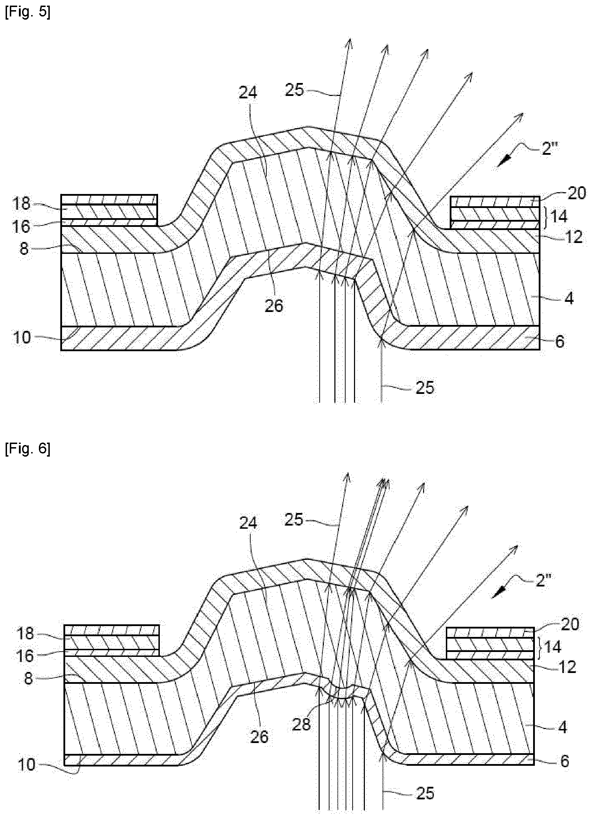

On a représenté en figure 5 une pièce de véhicule 2" obtenue par la mise en oeuvre d'un procédé de fabrication selon un troisième mode de réalisation de l'invention. On décrira dans ce qui suit uniquement les différences que présentent la pièce de véhicule 2" par rapport à celle de la figure 3. Les éléments identiques ou similaires d'un mode de réalisation à un autre portent des références numériques identiques.

La pièce de véhicule 2" comprend une pièce transparente 4 présentant sur sa deuxième face 10 au moins une forme en relief dite secondaire 26. Ici, la pièce transparente 4 comprend autant de formes en relief secondaires 26 qu'elle comprend de formes en relief principales 24. Chaque forme en relief secondaire 26 se trouve à l'opposé d'une forme en relief principale 24 en considérant une direction d'épaisseur de la pièce transparente qui est verticale sur la figure 4, de sorte que l'ensemble des formes en relief secondaires 26 est l'image de l'ensemble des formes en relief principales 24 par une fonction bijective. Chaque forme en relief secondaire 26 présente une convexité opposée, mais une forme et des dimensions identiques, par rapport à la forme en relief principale 24 qui lui est opposée. Dans l'exemple de la figure 5, la pièce de véhicule 2" comprend une forme en relief principale 24 convexe et une forme en relief secondaire 26 concave, de forme et de dimensions identiques de sorte qu'on pourrait emboîter deux pièces véhicule 2" l'une dans l'autre. En d'autres termes, la pièce transparente 4 présente une épaisseur uniforme. Tout comme dans la figure précédente, les rayons lumineux 25 illustrent la diffusion de la lumière traversant la pièce de véhicule 2". Les rayons lumineux 25 sont ici réfractés à deux reprises et dans la même direction, à savoir lorsqu'ils traversent la forme en relief secondaire 26 puis lorsqu'ils traversent la forme en relief principale 24.

Le film semi-transparent 6, la couche de protection 12, la couche de vernis 20 et la couche de peinture 14 sont déposées et gravées de la même manière que dans les précédents modes de réalisation de l'invention, en mettant en oeuvre les étapes a0) à a3) et b) et en effectuant l'irradiation laser de l'étape a3) au moins en regard des formes en relief principales.

On a représenté en figure 6 une pièce de véhicule 2" selon une variante du troisième mode réalisation illustré en figure 5. Elle en diffère en ce qu'à l'intérieur de la forme en relief secondaire 26, la seconde face 10 de la pièce transparente 4 comprend au moins un relief dit optique 28 configuré pour altérer davantage la trajectoire de certains des rayons lumineux 25 traversant la pièce transparente 4. Le relief optique 28 se présente ici sous la forme d'un relief convexe, générant une forte concentration locale des rayons lumineux sortant de la pièce de véhicule 2" par la première face 8. On peut toutefois prévoir toute forme possible pour le relief optique. A titre d'exemple, la forme du relief optique peut être telle qu'il forme un collimateur, un prisme concave ou un prisme convexe.

L'invention n'est pas limitée aux modes de réalisation présentés et d'autres modes de réalisation apparaîtront clairement à l'homme du métier.

Pour réaliser le motif, on peut remplacer la technique de gravure par irradiation laser par des techniques de masquage ou de marouflage si le degré de précision de ces techniques est satisfaisant lors de la mise en oeuvre de l'invention. On peut par ailleurs prévoir d'employer un masquage ou un marouflage puis de mettre en oeuvre une gravure par irradiation laser afin de rendre plus précis la réalisation du motif.

La source de lumière peut faire partie d'un bloc optique de feux de croisement et de route du véhicule, d'un bloc optique de feux clignotant du véhicule, ou bien d'un bloc optique de feux décoratifs.

Alternativement, la pièce transparente peut intégrer des guides de lumière ou des sources de lumière sans bloc optique, par moulage d'insert, surmoulage, fixation par collage, soudure, rivetage ou tout autre moyen de fixation.

### Liste de références

- 2 ; 2' ; 2" :: pièce de véhicule
- 4 :: pièce transparente ou translucide
- 6 :: film semi-transparent
- 8 :: première face
- 10 :: seconde face
- 12 :: couche de protection
- 14 :: couche de peinture
- 16 :: sous-couche de primaire
- 18 :: couche de base
- 20 :: couche de vernis
- 22 :: rayonnement laser
- 24 :: forme en relief principale
- 25 :: rayon lumineux
- 26 :: forme en relief secondaire
- 28 :: relief optique

## Revendications

1. Procédé de fabrication d'une pièce de véhicule (2 ; 2' ; 2"), comprenant les étapes suivantes :
a1) application d'une couche de peinture (14) sur une première face (8) d'une pièce transparente ou translucide (4),
a2) application d'une couche de vernis (20) sur la couche de peinture (14), et
a3) irradiation partielle de la couche de peinture (14) et de la couche de vernis (20) avec un rayonnement laser (22) de manière à graver la couche de peinture (14) et la couche de vernis (20),
**caractérisé en ce qu'**il comprenant outre l'étape suivante :
b) surmoulage d'un film semi-transparent (6) sur une seconde face (10) de la pièce transparente ou translucide (4) opposée à la première face (8).

2. Procédé selon la revendication 1, dans lequel on met en oeuvre l'étape suivante avant l'étape a1) :
a0) application d'une couche de protection (12) sur la première face (8) de la pièce transparente ou translucide (4), sous la couche de peinture (14).

3. Procédé selon l'une quelconque des revendications précédentes, dans lequel on fabrique la pièce transparente ou translucide (4) par moulage d'un plastique, par exemple du polycarbonate, du polypropylène, du polytéréphtalate d'éthylène ou du poly(méthacrylate de méthyle).

4. Procédé selon l'une quelconque des revendications précédentes, dans lequel le rayonnement laser (22) présente une longueur d'onde comprise dans l'infrarouge, de préférence dans l'infrarouge proche, ou dans l'ultraviolet.

5. Procédé selon l'une quelconque des revendications précédentes, dans lequel le film semi-transparent (6) présente un effet visuel choisi parmi la liste suivante : aspect chromé, métallisé, brillant, mat, satiné, brossé ou cuivré, effet miroir.

6. Procédé selon l'une quelconque des revendications précédentes, dans lequel le film semi-transparent (6) comprend un empilement de couches réalisées en polytéréphtalate d'éthylène.

7. Procédé selon l'une quelconque des revendications précédentes, dans lequel le film semi-transparent (6) présente une épaisseur comprise entre 100 µm et 1 mm.

8. Procédé selon l'une quelconque des revendications précédentes, dans lequel la pièce transparente ou translucide (4) présente, sur sa première face (8), au moins une forme en relief principale (24).

9. Procédé selon la revendication précédente, dans lequel on effectue l'irradiation laser de l'étape a3) au moins en regard de l'au moins une forme en relief principale (24).

10. Procédé selon la revendication 8 ou 9, dans lequel la deuxième face (10) présente au moins une forme en relief secondaire (26) opposée à la forme en relief principale (24) et de convexité opposée.

11. Pièce de véhicule (2 ; 2' ; 2") comprenant :
- une pièce transparente ou translucide (4) présentant une première face (8) et une seconde face (10) opposée à la première face (8),
- une couche de peinture (14) appliquée sur la première face (8), et
- une couche de vernis (20) appliquée sur la couche de peinture (14), la couche de peinture (14) et la couche de vernis (20) étant gravée selon un même motif prédéterminé,
**caractérisée en ce qu'**elle comprend en outre un film semi-transparent (6) surmoulé sur la seconde face (10) de la pièce transparente ou translucide (4).

12. Pièce de véhicule (2 ; 2' ; 2") selon la revendication 11, dans laquelle le film semi-transparent (6) présente un effet visuel choisi parmi la liste suivante : aspect chromé, métallisé, brillant, mat, satiné, brossé ou cuivré, effet miroir.

13. Pièce de véhicule (2 ; 2' ; 2") selon la revendication 11 ou 12, dans laquelle le film semi-transparent (6) comprend un empilement de couches réalisées en polytéréphtalate d'éthylène.

14. Pièce de véhicule (2 ; 2' ; 2") selon l'une quelconque des revendications 11 à 13, dans laquelle le film semi-transparent (6) présente une épaisseur comprise entre 100 µm et 1 mm.

## Patentansprüche

1. Verfahren zur Herstellung eines Fahrzeugteils (2 ; 2' ; 2"), umfassend die folgenden Schritte:
a1) Auftragen einer Farbschicht (14) auf einer ersten Fläche (8) eines transparenten oder lichtdurchlässigen Teils (4),
a2) Auftragen einer Lackschicht (20) auf der Farbschicht (14) und
a3) Teilbestrahlen der Farbschicht (14) und der Lackschicht (20) mit einer Laserstrahlung (22) derart, dass die Farbschicht (14) und die Lackschicht (20) geätzt werden,
**dadurch gekennzeichnet, dass** es ferner den folgenden Schritt umfasst: b) Hinterspritzen einer halbtransparenten Folie (6) auf einer zweiten Fläche (10) des transparenten oder lichtdurchlässigen Teils (4), die der ersten Fläche (8) gegenüberliegt.

2. Verfahren nach Anspruch 1, bei dem vor dem Schritt a1) der folgende Schritt durchgeführt wird:
a0) Auftragen einer Schutzschicht (12) auf der ersten Fläche (8) des transparenten oder lichtdurchlässigen Teils (4), unter der Farbschicht (14).

3. Verfahren nach einem der vorhergehenden Ansprüche, bei dem das transparente oder lichtdurchlässige Teil (4) durch Formen eines Kunststoffs, zum Beispiel Polycarbonat, Polypropylen, Polyethylenterephthalat oder Poly(methylmethacrylat), hergestellt wird.

4. Verfahren nach einem der vorhergehenden Ansprüche, bei dem die Laserstrahlung (22) eine Wellenlänge aufweist, die im Infrarot, bevorzugt im nahen Infrarot, oder im Ultraviolett liegt.

5. Verfahren nach einem der vorhergehenden Ansprüche, bei dem die halbtransparente Folie (6) eine visuelle Wirkung aufweist, die aus der folgenden Liste ausgewählt ist: Chrom-, Metall-, Glanz-, Matt-, Satin-, Bürst- oder Kupfer-Optik, Spiegeleffekt.

6. Verfahren nach einem der vorhergehenden Ansprüche, bei dem die halbtransparente Folie (6) eine Stapelung aus Schichten umfasst, die aus Polyethylenterephthalat realisiert sind.

7. Verfahren nach einem der vorhergehenden Ansprüche, bei dem die halbtransparente Folie (6) eine Dicke zwischen 100 µm und 1 mm aufweist.

8. Verfahren nach einem der vorhergehenden Ansprüche, bei dem das transparente oder lichtdurchlässige Teil (4), auf seiner ersten Fläche (8), wenigstens eine erhabene Hauptform (24) aufweist.

9. Verfahren nach dem vorhergehenden Anspruch, bei dem die Laserbestrahlung in Schritt a3) der wenigstens einen erhabenen Hauptform (24) gegenüber erfolgt.

10. Verfahren nach Anspruch 8 oder 9, bei dem die zweite Fläche (10) wenigstens eine erhabene Sekundärform (26) aufweist, die der erhabenen Hauptform (24) gegenüberliegt und entgegengesetzter Konvexität ist.

11. Fahrzeugteil (2 ; 2' ; 2"), umfassend:
- ein transparentes oder lichtdurchlässiges Teil (4), das eine erste Fläche (8) und eine zweite Fläche (10), die der ersten Fläche (8) gegenüberliegt, aufweist,
- eine Farbschicht (14), die auf der ersten Fläche (8) aufgetragen ist, und
- eine Lackschicht (20), die auf der Farbschicht (14) aufgetragen ist, wobei die Farbschicht (14) und die Lackschicht (20) gemäß einem gleichen vorbestimmten Muster geätzt sind,
**dadurch gekennzeichnet, dass** es ferner eine halbtransparente Folie (6) umfasst, die auf der zweiten Fläche (10) des transparenten oder lichtdurchlässigen Teils (4) hinterspritzt ist.

12. Fahrzeugteil (2 ; 2' ; 2") nach Anspruch 11, wobei die halbtransparente Folie (6) eine visuelle Wirkung aufweist, die aus der folgenden Liste ausgewählt ist: Chrom-, Metall-, Glanz-, Matt-, Satin-, Bürst- oder Kupfer-Optik, Spiegeleffekt.

13. Fahrzeugteil (2 ; 2' ; 2"), nach Anspruch 11 oder 12, wobei die halbtransparente Folie (6) eine Stapelung aus Schichten umfasst, die aus Polyethylenterephthalat realisiert sind.

14. Fahrzeugteil (2 ; 2' ; 2"), nach einem der Ansprüche 11 bis 13, wobei die halb-transparente Folie (6) eine Dicke zwischen 100 µm und 1 mm aufweist.

## Claims

1. Method for manufacturing a vehicle part (2', 2', 2"), comprising the following steps:
a1) applying a paint layer (14) on a first face (8) of a transparent or translucent part (4),
a2) applying a varnish layer (20) on the coat of paint (14), and
a3) partially irradiating the paint layer (14) and the varnish layer (20) with a laser radiation (22) so as to engrave the paint layer (14) and the varnish layer (20),
**characterized in that** it also comprises the following step:
b) overmoulding of a semi-transparent film (6) on a second face (10) of the transparent or translucent part (4) opposite the first face (8).

2. Method according to claim 1, wherein the following step is carried out before step a1):
a0) applying a protective layer (12) on the first face (8) of the transparent or translucent part (4), under the paint layer (14).

3. Method according to any one of the preceding claims, wherein the transparent or translucent part (4) is made by moulding a plastic, e.g. polycarbonate, polypropylene, polyethylene terephthalate or poly(methyl methacrylate).

4. Method according to any one of the preceding claims, wherein the laser radiation (22) has a wavelength in the infrared, preferably in the near-infrared, or in the ultraviolet.

5. Method according to any one of the preceding claims, wherein the semi-transparent film (6) has a visual effect chosen from the following list: chrome, metallic, glossy, matt, satin, brushed or copper-plated appearance, mirror effect.

6. Method according to any one of the preceding claims, wherein the semi-transparent film (6) comprises a stack of layers made of polyethylene terephthalate.

7. Method according to any one of the preceding claims, wherein the semi-transparent film (6) has a thickness of between 100 µm and 1 mm.

8. Method according to any one of the preceding claims, wherein the transparent or translucent part (4) has, on its first face (8), at least one main shape in relief (24).

9. Method according to the preceding claim, wherein the laser irradiation of step a3) is carried out at least opposite the at least one main shape in relief (24).

10. Method according to claim 8 or 9, wherein the second face (10) has at least one secondary shape in relief (26) opposite the main shape in relief (24) and of opposite convexity.

11. Vehicle part (2', 2", 2") comprising:
- a transparent or translucent part (4) with a first face (8) and a second face (10) opposite the first face (8),
- a paint layer (14) applied to the first face (8), and
- a varnish layer (20) applied over the paint layer (14), the paint layer (14) and the varnish layer (20) being engraved according to the same predetermined pattern,
**characterized in that** it further comprises a semi-transparent film (6) overmoulded on the second face (10) of the transparent or translucent part (4).

12. Vehicle part (2'; 2"; 2") according to claim 11, wherein the semi-transparent film (6) has a visual effect chosen from the following list: chrome, metallic, glossy, matte, satin, brushed or copper-plated appearance, mirror effect.

13. Vehicle part (2, 2', 2") according to claim 11 or 12, wherein the semi-transparent film (6) comprises a stack of layers made of polyethylene terephthalate.

14. Vehicle part (2', 2", 2") according to any one of claims 11 to 13, wherein the semi-transparent film (6) has a thickness of between 100 µm and 1 mm.
